# EUROPEAN PATENT SPECIFICATION

(11) **EP 3 101 046 B1**
(45) Date of publication and mention of the grant of the patent: **13.06.2018**
(21) Application number: 16166534.4
(22) Date of filing: 22.04.2016
(51) Int. Cl.: C08G 59/62, C08G 8/22, C08L 61/12, C08L 63/00

(54) **LIQUID RESIN COMPOSITION**
FLÜSSIGE HARZZUSAMMENSETZUNG
COMPOSITION DE RÉSINE LIQUIDE

(30) Priority: 20.05.2015 JP 2015102468
(43) Date of publication of application: 07.12.2016
(73) Proprietor: Shin-Etsu Chemical Co., Ltd., Chiyoda-ku, Tokyo 100-0004 (JP)
(72) Inventor: Kushihara, Naoyuki, Gunma, 379-0224 (JP); Sumita, Kazuaki, Gunma, 3790224 (JP)
(74) Representative: Angerhausen, Christoph

(56) References cited:
- EP-A1- 3 037 492
- JP-A- 2001 055 425
- JP-A- 2003 246 842
- US-A1- 2012 178 853

## Description

### Technical field

The present invention relates to a liquid resin composition having an excellent reliability, capable of forming a cured product exhibiting a smaller degree of heat decomposition (weight reduction) and superior mechanical properties even under a high-temperature and high-humidity environment.

### Background art

In recent years, as a countermeasure(s) against global warming, there have been promoted global-scale environmental actions such as energy source conversions from fossil fuels. For this reason, in the automotive field, the number of hybrid vehicles and electric vehicles manufactured has increased. Further, in emerging countries such as China and India, there have been seen more types of home electronics equipped with an inverter motor as an energy saving measure.

In the case of hybrid and/or electric vehicles and invertor motors, a power semiconductor is critical for converting alternate current to direct current or vice versa, and for performing voltage transformation. However, silicon (Si) which has been used as a power semiconductor for many years is approaching its performance limitation, and it has become difficult to expect a drastic performance improvement. Here, much attention has been drawn to next-generation power semiconductors employing materials such as silicon carbide (SiC), gallium nitride (GaN) and diamond. For example, it has been demanded that the resistance of a power MOSFET be lowered to reduce power loss at the time of power conversion. However, it is difficult to drastically lower the resistance of the mainstream Si-MOSFET. Here, developments are being made in the production of a low-loss power MOSFET using SiC as a wide band-gap semiconductor.

SiC and GaN have a superior property that their band gaps are about 3 times wider than that of Si, and their breakdown field strengths are 10 or more times higher than that of Si. Also, SiC and GaN have features such as a high-temperature operation (reportedly operable at 650°C in the case of SiC), a high thermal conductivity (same level as Cu in the case of SiC) and a high saturated electron drift velocity. Due to these features, the on-resistance of a power semiconductor can be lowered by employing SiC and GaN, such that the power loss in a power converter circuit can be drastically reduced.

A power semiconductor is usually protected through transfer molding using an epoxy resin or through potting encapsulation using a silicone gel. In these days, from the perspective of reduction in size and weight (especially for automobile use), transfer molding using an epoxy resin has almost become a mainstream encapsulation method. However, although an epoxy resin is a well-balanced heat curable resin superior in moldability, adhesion to a base material and in mechanical strength, a heat decomposition at crosslinked points will progress at a temperature higher than 200°C. For this reason, there has been a concern that an epoxy resin may not be able to serve as an encapsulation material under such a high-temperature operation environment as it is expected of SiC and GaN (non-patent document 1).

Here, as a material superior in heat resistance, there has been considered a heat curable resin composition containing a cyanate resin(s). For example, Patent documents 1 and 4 discloses a resin composition comprised of an epoxy resin, a phenol novolac resin and a multivalent cyanate ester. Further, Patent document 1 discloses that a stable heat resistance can be achieved as an oxazole ring(s) are formed by a reaction of the multivalent cyanate ester and the epoxy resin in a cured product of the epoxy resin and the phenol novolac resin. Furthermore, Patent document 2 describes that a heat curable resin composition comprising a cyanate ester compound having a particular structure; a phenol compound; and an inorganic filler, is superior in heat resistance and has a high mechanical strength. Patent document 3 describes that there can be achieved a superior filling property and a superior reliability by using a particular phenolic resin as a curing agent in a liquid cyanate resin and a liquid epoxy resin.

### Prior art document

### Patent document

Patent document 1: Japanese Examined Patent Publication No. Hei 6-15603
Patent document 2: JP-A-2013-53218
Patent document 3: Japanese Patent No. 3283451
Patent document 4: Japanese Patent No. 2003 246842

### Non-patent document 1

ENGINEERING MATERIALS November issue of 2011 (vol. 59 No. 11) p.58 to 63

### Summary of the invention

### Problem to be solved by the invention

However, the composition disclosed in Patent document 1 requires a high-temperature and prolonged heat curing step for forming an oxazole ring(s) by a reaction of epoxy groups and cyanato groups. That is, the composition disclosed in Patent document 1 has a problem of being inferior in mass productivity. Further, the composition disclosed in Patent document 2 has an insufficient moisture resistance. Therefore, this composition has a problem that the mechanical properties thereof will be impaired when left under a high-temperature and high-humidity environment for a long period of time. Also, in the case of Patent document 3, an electrical failure(s) may occur if using a metal catalyst.

That is, it is an object of the present invention to provide an excellently reliable resin composition capable of forming a cured product exhibiting a smaller degree of heat decomposition (weight reduction) even when left under a high temperature of not lower than 200°C e.g. 200 to 250°C for a long period of time; and superior mechanical properties even under a high-temperature and high-humidity environment.

### Means to solve the problem

In view of the aforementioned problems, the inventors of the present invention diligently conducted a series of studies to complete the invention, and found that the following resin composition(s) were capable of solving the abovementioned problems.

That is, the present invention is to provide the following composition(s).
(1) A liquid resin composition consisting 9 of:
   (A) a cyanate ester compound having not less than two cyanato groups in one molecule;
   (B) a phenol curing agent containing 50 to 100 % by mass of a resorcinol-type phenolic resin represented by the following formula (1) 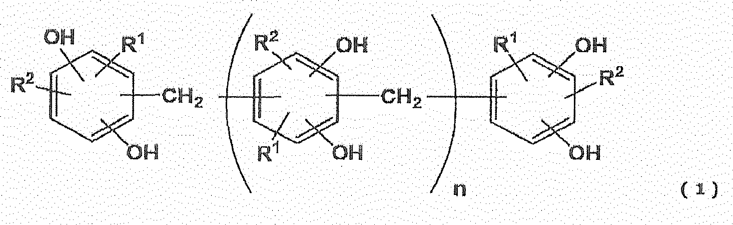 in which n represents an integer of 0 to 10; each of R₁ and R₂ independently represents a hydrogen atom or a monovalent group selected from an alkyl group having 1 to 10 carbon atoms, an allyl group and a vinyl group;
   (C) an epoxy resin; and
   (D) a curing accelerator, in which
      the cyanate ester compound (A) is in an amount of 30 to 80 parts by mass with respect to 100 parts by mass of a sum total of the cyanate ester compound (A), the phenol curing agent (B) and the epoxy resin (C).
(2) The liquid resin composition according to (1), in which the component (C) is at least one liquid epoxy resin selected from the group consisting of a liquid bisphenol A-type epoxy resin, a liquid bisphenol F-type epoxy resin, a liquid naphthalene-type epoxy resin, a liquid aminophenol-type epoxy resin, a liquid hydrogenated bisphenol-type epoxy resin, a liquid alicyclic epoxy resin, a liquid alcohol ether-type epoxy resin, a liquid cycloaliphatic-type epoxy resin and a liquid fluorene-type epoxy resin.
(3) The liquid resin composition according to (1) or (2), in which cyanato groups in the cyanate ester compound (A) are in an amount of 1 to 50 equivalents with respect to 1 equivalent of hydroxyl groups in the resorcinol-type phenolic resin contained in the component (B).
(4) The liquid resin composition according to any one of (1) to (3), in which the component (D) is added in an amount of not larger than 5 parts by mass with respect to 100 parts by mass of the component (A).

### Effects of the invention

According to the present invention, there can be obtained a liquid resin composition that is superior in workability; exhibits a small degree of resin deterioration under a high-temperature and high-humidity environment; and is capable of being cured at a lower temperature as compared with conventional techniques.

### Brief descriptions of drawings

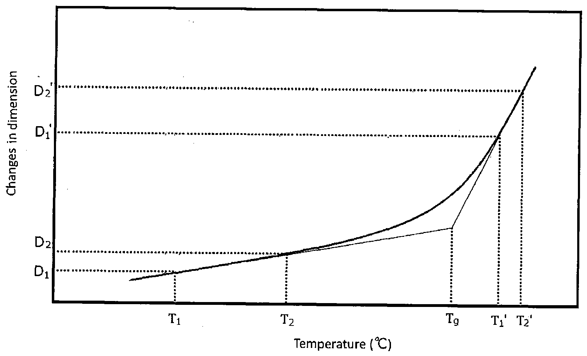

FIG.1 is a graph showing a method for determining a glass-transition temperature.

### Mode for carrying out the invention

The present invention is described in detail hereunder.

### (A): Cyanate ester compound

A component (A) is a main component of the composition of the present invention. The component (A) is a cyanate ester compound having not less than two cyanato groups.

As a cyanate ester compound having not less than two cyanato groups, there may be used a known cyanate ester compound.

Examples of such cyanate ester compound include bis (4-cyanatophenyl) methane, bis (3-methyl-4-cyanatophenyl) methane, bis (3-ethyl-4-cyanatophenyl) methane, bis (3,5-dimethyl-4-cyanatophenyl) methane, 1,1-bis (4-cyanatophenyl) ethane, 2,2-bis (4-cyanatophenyl) propane, 2,2-bis (4-cyanatophenyl)-1,1,1,3,3,3-hexafluoropropane, 1,3-dicyanatobenzene, 1,4-dicyanatobenzene, 2-tert-butyl-1,4-dicyanatobenzene, 2,4-dimethyl-1,3-dicyanatobenzene, 2,5-di-tert-butyl-1,4-dicyanatobenzene, tetramethyl-1,4-dicyanatobenzene, 1,3,5-tricyanatobenzene, 2,2'-dicyanatobiphenyl, 4,4'-dicyanatobiphenyl, 3,3',5,5'-tetramethyl-4,4'-dicyanatobiphenyl, 1,3-dicyanatonaphthalene, 1,4-dicyanatonaphthalene, 1,5-dicyanatonaphthalene, 1,6-dicyanatonaphthalene, 1,8-dicyanatonaphthalene, 2,6-dicyanatonaphthalene, 2,7-dicyanatonaphthalene, 1,3,6-tricyanatonaphthalene; 1,1,1-tris (4-cyanatophenyl) ethane, bis (4-cyanatophenyl) ether; 4,4'-(1,3-phenylenediisopropylidene) diphenylcyanate, bis (4-cyanatophenyl) thioether, bis (4-cyanatophenyl) sulfone, tris (4-cyanato-phenyl) phosphine, phenol novolac cyanate, cresol novolac cyanate and dicyclopentadiene novolac cyanate. Each of these cyanate ester compounds may be used singularly, or two or more of these cyanate ester compounds may be used in combination.

Among the abovementioned cyanate ester compounds, preferable examples are bis (4-cyanatophenyl) methane, bis (3-methyl-4-cyanatophenyl) methane, 1,1-bis (4-cyanatophenyl) ethane and phenol novolac cyanate, each being in the form of a liquid at 80°C. More preferable examples are 1,1-bis (4-cyanatophenyl) ethane and phenol novolac cyanate.

It is preferred that the cyanate ester compound as the component (A) be contained in an amount of 30 to 80% by mass, more preferably 40 to 80% by mass, particularly preferably 50 to 80% by mass, with respect to a sum total of components

### (A) to (C) of the present invention.

### (B): Phenol curing agent

A component (B) is a phenol curing agent containing a resorcinol-type phenolic resin represented by the following formula (1). 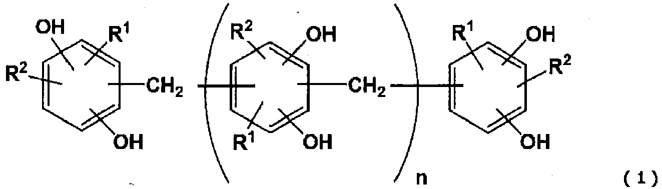 (in the above formula, n represents an integer of 0 to 10; and each of R¹ and R² independently represents a hydrogen atom or a monovalent group selected from an alkyl group having 1 to 10 carbon atoms, an allyl group and a vinyl group.)

"n" in formula (1) represents 0 to 10 in terms of melt fluidity. When n is greater than 10, the resin composition will not melt at a temperature not higher than 100°C, thus causing the fluidity of the resin composition to decrease. There may be used in combination two or more kinds of resorcinol-type phenolic resins having different "n" values, or a resorcinol-type phenolic resin(s) having a distribution in such "n" value. It is preferred that each of R¹ and R² in formula (1) be a hydrogen atom or a monovalent group selected from an alkyl group having 1 to 10 carbon atoms, an allyl group and a vinyl group. And, it is particularly preferred that each of R¹ and R² be a hydrogen atom or a monovalent group selected from an alkyl group having 1 to 4 carbon atoms, an allyl group and a vinyl group. Further, R¹ and R² may be functional groups differing from each other. Furthermore, as each of R¹ and R², a sufficient heat resistance cannot be imparted to a cured product of the liquid resin composition if employing an alkyl group having more than 10 carbon atoms, and a viscosity of the liquid resin composition at a room temperature will increase if employing an aromatic group such as an aryl group.

As for a quantitative ratio between the components (A) and (B), it is preferred that the cyanato groups (CN groups) in the cyanate ester compound as the component (A) be in an amount of 1 to 50 equivalents, more preferably 1 to 40 equivalents, particularly preferably 5 to 40 equivalents, with respect to 1 equivalent of the hydroxyl groups (OH groups) in the resorcinol-type phenolic resin as the component (B). It is not preferable when the cyanato groups (CN groups) in the cyanate ester compound as the component (A) is in an amount of greater than 50 equivalents with respect to 1 equivalent of the hydroxyl groups (OH groups) in the resorcinol-type phenolic resin as the component (B), because insufficient curing will occur under such condition. Also, it is not preferable when the cyanato groups (CN groups) in the cyanate ester compound as the component (A) is in an amount of smaller than 1 equivalent with respect to 1 equivalent of the hydroxyl groups (OH groups) in the resorcinol-type phenolic resin as the component (B), because the heat resistance of cyanate ester itself may be impaired in such case.

Since the component (B) contains the resorcinol-type phenolic resin represented by formula (1), it is capable of reducing a resin viscosity at a room temperature, and promoting a curing reaction of the cyanate ester compound. Moreover, since the resorcinol-type phenolic resin itself has a high heat resistance, there can be obtained a cured product exhibiting a superior heat resistance.

Other than the resorcinol-type phenolic resin represented by formula (1), the phenol curing agent as the component (B) may also contain, for example, the phenol curing agents represented by the following formulae

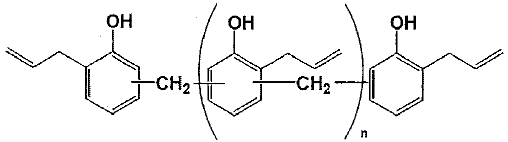

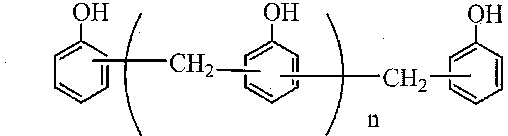

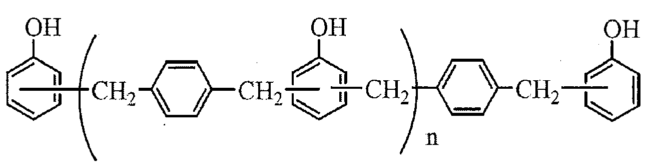

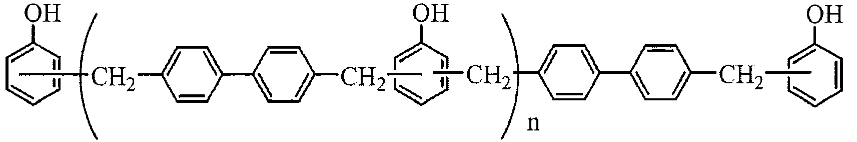

In the above formulae, n represents a number of 0 to 15.

Specific examples of phenol curing agents other than the resorcinol-type phenolic resin represented by formula (1) include MEH-8000H (by MEIWA PLASTIC INDUSTRIES, LTD; phenolic hydroxyl group equivalent 141), TD-2131 (by DIC Corporation; phenolic hydroxyl group equivalent 110), PL6238 (by Gunei Chemical Industry Co., Ltd.; phenolic hydroxyl group equivalent 110), MEH7800SS (by MEIWA PLASTIC INDUSTRIES, LTD; phenolic hydroxyl group equivalent 175) and MEH-7851SS (by MEIWA PLASTIC INDUSTRIES, LTD; phenolic hydroxyl group equivalent 203).

In the component (B), the resorcinol-type phenolic resin represented by formula (1) is contained in an amount of 50 to 100 % by mass, preferably 70 to 100 % by mass.

### (C): Epoxy resin

A known epoxy resin may be used as a component (C). Examples of such epoxy resin include a liquid bisphenol A-type epoxy resin, a liquid bisphenol F-type epoxy resin, a liquid naphthalene-type epoxy resin, a liquid aminophenol-type epoxy resin, a liquid hydrogenated bisphenol-type epoxy resin, a liquid alicyclic epoxy resin, a liquid alcohol ether-type epoxy resin, a liquid cycloaliphatic-type epoxy resin and a liquid fluorene-type epoxy resin.

### (D): Curing accelerator

Preferable examples of a curing accelerator as a component (D) include 1,8-diazabicyclo [5.4.0] undecene-7 (DBU), 1,5-diazabicyclo [4.3.0] nonene-5 (DBN) and their salts; amine-based curing accelerators; and phosphorous compounds. It is preferred that the component (D) be added in an amount of not larger than 5 parts by mass, more preferably 0.01 to 5 parts by mass, with respect to 100 parts by mass of the cyanate ester compound (A) having not less than two cyanato groups.

Specific examples of a DBU salt include a phenol salt of DBU, an octylic acid salt of DBU, a p-toluenesulfonic acid salt of DBU, a formic acid salt of DBU, an orthophthalic acid salt of DBU, a trimellitic anhydride salt of DBU, a phenol novolac resin salt of DBU and a tetraphenylborate salt of DBU.

One example of such tetraphenylborate salt of DBU is a compound represented by the following formula (2).

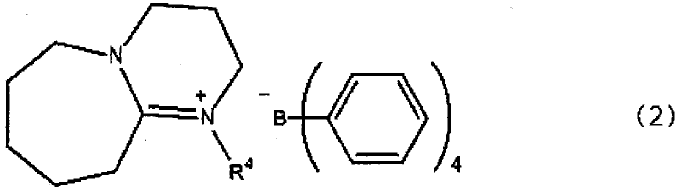

In formula (2), R⁴ represents a hydrogen atom or a group selected from a monovalent saturated hydrocarbon group having 1 to 30, preferably 1 to 20 carbon atoms and a monovalent unsaturated hydrocarbon group having 2 to 30, preferably 2 to 20 carbon atoms. Specific examples of R⁴ include a linear saturated hydrocarbon group such as a methyl group, an ethyl group, an n-propyl group, an n-butyl group, an n-pentyl group and an n-hexyl group; a branched saturated hydrocarbon group such as an isopropyl group, an isobutyl group, a t-butyl group, an isopentyl group and a neopentyl group; a cyclic saturated hydrocarbon group such as a cyclopentyl group, a cyclohexyl group and a cycloheptyl group; a linear unsaturated hydrocarbon group such as a vinyl group, an allyl group and a 1-butenyl group; and an aromatic hydrocarbon group such as a phenyl group, a tolyl group, a benzyl group and a naphthyl group. Preferable examples of R⁴ include a hydrogen atom, a methyl group, an n-butyl group, a phenyl group and a benzyl group.

Meanwhile, specific examples of a DBN salt include a phenol salt of DBN, an octylic acid salt of DBN, a p-toluenesulfonic acid salt of DBN, a formic acid salt of DBN, an orthophthalic acid salt of DBN, a trimellitic anhydride salt of DBN, a phenol novolac resin salt of DBN and a tetraphenylborate salt of DBN.

The following curing accelerators may also be used as the curing accelerator of the present invention.

Examples of an amine-based curing accelerator include an aromatic amine-based curing accelerator such as 3,3'-diethyl-4,4'-diaminodiphenylmethane, 3,3',5,5'-tetramethyl-4,4'-diaminodiphenylmethane, 3,3',5,5'-tetraethyl-4,4'-diaminodiphenylmethane, 2,4-diaminotoluene, 1,4-phenylenediamine, 1,3-phenylenediamine, diethyltoluenediamine, 3,4'-diaminodiphenyl ether, 3,3'-diaminodiphenylmethane, 3,4'-diaminodiphenylmethane, 4,4'-diaminodiphenylmethane, 3,3'-diaminobenzidine, orthotolidine, 3,3'-dimethyl-4,4'-diaminodiphenylmethane, 2,6-diaminotoluene and 1,8-diaminonaphthalene. Other examples of the amine-based curing accelerator of the present invention include a chain aliphatic polyamine such as N,N'-bis (3-aminopropyl) ethylenediamine, 3,3'-diaminodipropylamine, 1,8-diaminooctane, 1,10-diaminodecane, diethylenetriamine, triethylenetetramine and tetraethylenepentamine; a cycloaliphatic polyamine such as 1,4-bis (3-aminopropyl) piperazine, N-(2-aminoethyl) piperazine, N-(2-aminoethyl) morpholine and isophoronediamine; polyamidoamine; an imidazole-based curing accelerator; and a guanidine-based curing accelerator. The aforementioned polyamidoamine is prepared by condensation of dimer acid and polyamine. Examples of such polyamidoamine include adipic acid dihydrazide and 7,11-octadecadiene-1,18-dicarbohydrazide. Examples of the aforementioned imidazole-based curing accelerator include 2-methylimidazole, 2-ethyl-4-methylimidazole and 1,3-bis (hydrazinocarbonoethyl)-5-isopropylhydantoin. Examples of the aforementioned guanidine-based curing accelerator include aliphatic amines such as 1,3-diphenylguanidine and 1,3-o-triguanidine. Particularly, it is preferred that an imidazole-based curing accelerator be used.

Further, examples of a phosphorous compound include triphenylphosphine, tributylphosphine, tri (p-methylphenyl) phosphine, tri (nonylphenyl) phosphine, triphenylphosphine-triphenylborane and tetraphenylphosphine-tetraphenylborate. Such phosphorous compound may be mixed with a phenol curing agent and/or silica before use.

The liquid resin composition of the present invention is obtained by combining given amounts of the components (A) to (D).

The liquid resin composition of the present invention can be prepared by a method shown below.

For example, a mixture of the components (A) to (C) can be obtained by simultaneously or separately mixing, stirring, melting and/or dispersing the cyanate ester compound (A), the phenol curing agent (B) and the epoxy resin (C) while performing a heating treatment if necessary. Preferably, a mixture of the components (A) to (D) may also be obtained by adding the curing accelerator (D) to the mixture of the components (A) to (C), and then stirring, melting and/or dispersing the same.

There are no particular restrictions on a preparation method of the composition and a device(s) for performing mixing, stirring and dispersion. However, specific examples of such device(s) include a kneader equipped with a stirring and heating devices, a twin-roll mill, a triple-roll mill, a ball mill, a planetary mixer and a mass-colloider. These devices can also be appropriately used in combination.

### Working example

The present invention is described in greater detail hereunder with reference to working and comparative examples. However, the present invention is not limited to the following working examples.

### Working examples 1 to 19; and Comparative examples 1 to 9

Liquid resin compositions were prepared by combining the following components in accordance with the composition amounts shown in Tables 1-1, 1-2 and 2. Each of the liquid resin compositions was later heated in an oven at 150°C for 2 hours, and then at 200°C for another 4 hours. In this way, there were obtained all the cured products of the working examples 1 to 19 and the comparative examples 1 to 9. The expression "amount(s)" in Tables 1-1, 1-2 and 2 refers to "parts by mass."

### (A) Cyanate ester compound

(A1) Bis-E type cyanate ester compound represented by the following formula (3) (LECy by LONZA Japan) (melting point: 29°C, viscosity: 40 MPa·s at room temperature) 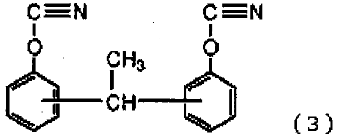
(A2) Novolac-type cyanate ester compound represented by the following formula (4) (PT-30 by LONZA Japan)

### (viscosity: 250 Pa·s at 25°C)

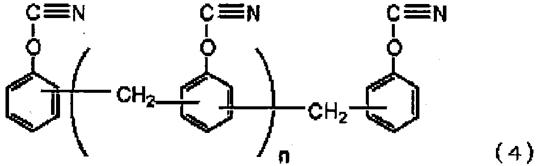

### (B) Phenol curing agent

(B1) Resorcinol-type phenolic resin (MEH-8400 by MEIWA PLASTIC INDUSTRIES, LTD)
(B2) Allylphenol novolac resin (MEH-8000H by MEIWA PLASTIC INDUSTRIES, LTD)

### (C) Epoxy resin

(C1) Bisphenol A-type epoxy resin (YD-8125 by NIPPON STEEL & SLTMIKIN CHEMICAL CO., LTD.)
(C2) Bisphenol F-type epoxy resin (YDF-8170 by NIPPON STEEL & SLTMIKIN CHEMICAL CO., LTD.)
(C3) Trifunctional amino epoxy resin (EP630 by Mitsubishi Chemical Corporation)
(C4) Naphthalene-type epoxy resin (HP4032D by DIC Corporation)
(C5) Fluorene-type epoxy resin (OGSOL EG280 by Osaka Gas Chemicals Co., Ltd.)
(C6) Alicyclic epoxy resin (CELLOXIDE 2021P by DAICEL CORPORATION)

### (D) Curing accelerator

(D1) Tetraphenylborate salt of 1,8-diazabicyclo [5.4.0] undecene-7 derivative (U-CAT 5002 by San-Apro Ltd.)
(D2) Tetraphenylphosphonium tetra-p-tolylborate (TPP-MK by HOKKO CHEMICAL INDUSTRY CO., LTD.)

### Viscosity

A viscosity of each liquid resin composition obtained in the working and comparative examples was measured. The measurement was performed in accordance with JIS Z8803:2011, and an E-type viscometer was used to perform the measurement at a temperature of 25°C. In fact, measured was a value two minutes after a specimen had been placed. The results thereof are shown in Tables 1-1, 1-2 and 2.

### Evaluation of curability

Each of the liquid resin compositions prepared in the working and comparative examples was poured into a mold of a thickness of 1 mm, and then heated in an oven at 150°C for an hour. The composition was then taken out of the oven to be cooled to a room temperature, and a curability evaluation was later performed after the composition had been cooled to such room temperature. The curability evaluation was performed in a manner such that compositions exhibiting no tackiness on the surfaces thereof were marked "○," whereas compositions exhibiting tackiness on the surfaces thereof or uncured compositions were marked "×." The results are shown in Tables 1-1, 1-2 and 2.

### Evaluation of adhesion

Each of the liquid resin compositions prepared in the working and comparative examples was poured into a mold, and then placed on a silicon chip as a circular truncated cone-shaped specimen of a size of 2 mm (upper surface diameter) ×5 mm (lower surface diameter) × 3 mm (height). The specimen thus prepared was later cured as a result of being heated at 150°C for 2 hours, and at 200°C for another 4 hours. A shear adhesion force of the cured specimen was then measured after the specimen had been cooled to a room temperature. Here, a measurement result was regarded as an initial value. The initial values of all the specimens are shown in Tables 1-1, 1-2 and 2.

### Adhesion force retention rate after storage under high temperature

As is the case with the measurement of the initial value, each of the liquid resin compositions prepared in the working and comparative examples was poured into a mold, and then placed on a silicon chip as a circular truncated cone-shaped specimen of a size of 2 mm (upper surface diameter) ×5 mm (lower surface diameter) × 3 mm (height). The specimen thus prepared was later cured as a result of being heated at 150°C for 2 hours, and at 200°C for another 4 hours. The cured specimen was then stored in an oven of 200°C for 1,000 hours, followed by cooling the specimen to a room temperature before measuring a shear adhesion force thereof. An adhesion force retention rate after storage under high temperature was calculated as (Shear adhesion force after storage at 200°C for 1,000 hours) / initial value × 100 (%). The adhesion force retention rates of all the specimens after storage under high temperature are shown in Tables 1-1, 1-2 and 2.

### Adhesion force retention rate after storage under high temperature and high humidity

As is the case with the measurement of the initial value, each of the liquid resin compositions prepared in the working and comparative examples was poured into a mold, and then placed on a silicon chip as a circular truncated cone-shaped specimen of a size of 2 mm (upper surface diameter) ×5 mm (lower surface diameter) × 3 mm (height). The specimen thus prepared was later cured as a result of being heated at 150°C for 2 hours, and at 200°C for another 4 hours. The cured specimen was then stored under a condition of 85°C / 85%RH for 1,000 hours, followed by cooling the specimen to a room temperature before measuring a shear adhesion force thereof. An adhesion force retention rate after storage under high temperature and high humidity was calculated as (Shear adhesion force after storage under 85°C / 85%RH for 1,000 hours) / initial value × 100 (%). The adhesion force retention rates of all the specimens after storage under high temperature and high humidity are shown in Tables 1-1, 1-2 and 2.

### Measurement of glass-transition temperature (Tg)

Each of the cured products prepared in the working and comparative examples was processed into a specimen of a size of 5 × 5 × 15 mm, followed by placing the same in a thermal dilatometer TMA 8140C (by Rigaku Corporation). After setting a temperature program to a rise rate of 5°C / min and arranging that a constant load of 19.6 mN be applied to the specimen, a change in size of the specimen was then measured during a period from 25°C to 300°C. The correlation between such change in size and the temperatures was then plotted on a graph. The glass-transition temperatures in the working and comparative examples were later obtained based on such graph showing the correlation between the change in size and the temperatures, and through the following method for determining the glass-transition temperature(s). The results are shown in Tables 1-1, 1-2 and 2.

### Determination of glass-transition temperature (Tg)

FIG.1 is a graph showing a method for determining a glass-transition temperature. In FIG.1, T₁ and T₂ represent two arbitrary temperatures that are not higher than the temperature at the inflection point and by which a tangent line to the size change-temperature curve can be drawn; whereas T₁' and T₂' represent two arbitrary temperatures that are not lower than the temperature at the inflection point and by which a similar tangent line can be drawn. D₁ and D₂ individually represent a change in size at T₁ and a change in size at T₂; whereas D₁' and D₂' individually represent a change in size at T₁' and a change in size at T₂'. The glass-transition temperature (Tg) is then defined as the temperature at the point of intersection between a straight line connecting points (T₁, D₁) and (T₂, D₂) and a straight line connecting points (T₁', D₁') and (T₂', D₂').

### Measurement of 5% weight reduction temperature

Each of the cured products prepared in the working and comparative examples was processed into a specimen of a size of 5 × 5 × 15 mm, followed by placing the same in a thermogravimetric analysis apparatus Pyris 1 TGA (by PerkinElmer Co., Ltd.). After setting a temperature program to a rise rate of 5°C / min, there was then measured a temperature at which the weight of each specimen reduced by 5% (referred to as 5% weight reduction temperature), under atmospheric pressure and during a period from a room temperature to 550°C. The 5% weight reduction temperatures measured in the working and comparative examples are shown in Tables 1-1, 1-2 and 2.

### Rate of change in bending strength

A bending strength of each liquid resin composition prepared in the working and comparative examples was measured in accordance with JIS K6911:2006 as follows. In the beginning, each composition was molded into a stick-shaped sample of a size of 10 × 100 × 4 mm as a result of being heated at 150°C for 2 hours, and at 200°C for another 4 hours. A bending strength of such stick-shaped sample (cured product) at 25°C was measured, and a measured value was marked BS1. Next, an stick-shaped sample produced under a similar condition was further heated at 250°C for another 200 hours, followed by measuring a bending strength thereof at 25°C. A measured value of such bending strength was marked BS2. A rate of change in bending strength was calculated by BS2/BS1×100 (%). The rates of changes in bending strength in the working and comparative examples are shown in Tables 1-1, 1-2 and 2.

**Table 1-1**

| | | Working example 1 | Working example 2 | Working example 3 | Working example 4 | Working example 5 | Working example 6 | Working example 7 | Working example 8 | Working example 9 | Working example 10 |
|---|---|---|---|---|---|---|---|---|---|---|---|
| Cyanate ester compound(A1) | | 30 | 30 | 50 | 50 | 50 | 50 | 50 | 50 | 80 | 80 |
| Cyanate ester compound(A2) | | | | | | | | | | | |
| Phenol curing agent(B1) | | 3.28 | 3.58 | 3.45 | 3.56 | 4.45 | 3.66 | 2.56 | 3.85 | 3.72 | 3.8 |
| Phenol curing agent(B2) | | | | | | | | | | | |
| Epoxy resin(C1) | | 66.72 | | 46.55 | | | | | | 16.28 | |
| Epoxy resin(C2) | | | | | 46.44 | | | | | | |
| Epoxy resin(C3) | | | | | | 45.55 | | | | | |
| Epoxy resin(C4) | | | 66.42 | | | | 46.34 | | | | 16.2 |
| Epoxy resin(C5) | | | | | | | | 47.44 | | | |
| Epoxy resin(C6) | | | | | | | | | 46.15 | | |
| Curing accelerator(D1) | | 0.5 | 0.5 | 0.5 | 0.5 | 0.5 | 0.5 | 0.5 | 0.5 | 0.5 | 0.5 |
| Curing accelerator(D2) | | | | | | | | | | | |
| Tg | °C | 170 | 190 | 190 | 170 | 260 | 200 | 170 | 220 | 200 | 210 |
| Viscosity | mPa·s | 800 | 4000 | 450 | 400 | 300 | 1000 | 1000 | 100 | 200 | 400 |
| Curability(150°C/1h) | | ○ | ○ | ○ | ○ | ○ | ○ | ○ | ○ | ○ | ○ |
| Adhesion | MPa | 35 | 32 | 34 | 31 | 36 | 35 | 32 | 26 | 40 | 37 |
| Adhesion force retention rate after storage under high temperature | % | 80 | 81 | 87 | 84 | 89 | 87 | 78 | 74 | 88 | 81 |
| Adhesion force retention rate after storage under high temperature and high humidity | % | 89 | 85 | 88 | 84 | 88 | 85 | 80 | 75 | 81 | 80 |
| 5% weight reduction temperature | °C | 365 | 375 | 380 | 370 | 370 | 390 | 380 | 360 | 400 | 420 |
| Rate of change in bending strength | % | 85 | 75 | 95 | 80 | 95 | 85 | 80 | 70 | 90 | 80 |

**Table 1-2**

| | | Working example 11 | Working example 12 | Working example 13 | Working example 14 | Working example 15 | Working example 16 | Working example 17 | Working example 18 | Working example 19 |
|---|---|---|---|---|---|---|---|---|---|---|
| Cyanate ester compound(A1) | | | | | 50 | 50 | 50 | 30 | 50 | 80 |
| Cyanate ester compound(A2) | | 30 | 50 | 80 | | | | | | |
| Phenol curing agent(B1) | | 3.41 | 3.68 | 4.16 | 3.51 | 3.56 | 3.66 | 3.28 | 3.45 | 3.72 |
| Phenol curing agent(B2) | | | | | | | | | | |
| Epoxy resin(C1) | | 66.59 | 46.32 | 15.84 | 25 | 23.22 | 23.17 | 66.72 | 46.55 | 16.28 |
| Epoxy resin(C2) | | | | | 23.25 | | | | | |
| Epoxy resin(C3) | | | | | | | | | | |
| Epoxy resin(C4) | | | | | | 23.22 | | | | |
| Epoxy resin(C5) | | | | | | | | | | |
| Epoxy resin(C6) | | | | | | | 23.17 | | | |
| Curing accelerator(D1) | | 0.5 | 0.5 | 0.5 | 0.5 | 0.5 | 0.5 | | | |
| Curing accelerator(D2) | | | | | | | | 0.5 | 0.5 | 0.5 |
| Tg | °C | 200 | 230 | 260 | 180 | 190 | 210 | 170 | 190 | 200 |
| Viscosity | mPa·s | 8000 | 20000 | 100000 | 400 | 650 | 250 | 800 | 450 | 200 |
| Curabitity(150°C/1h) | | ○ | ○ | ○ | ○ | ○ | ○ | ○ | ○ | ○ |
| Adhesion | MPa | 41 | 42 | 45 | 32 | 33 | 28 | 31 | 30 | 34 |
| Adhesion force retention rate after storage under high temperature | % | 88 | 92 | 84 | 85 | 88 | 80 | 82 | 85 | 88 |
| Adhesion force retention rate after storage under high temperature and high humidity | % | 87 | 90 | 81 | 83 | 89 | 79 | 90 | 91 | 90 |
| 5% weight reduction temperature | °C | 380 | 400 | 440 | 370 | 380 | 370 | 370 | 380 | 400 |
| Rate of change in bending strength | % | 90 | 95 | 95 | 85 | 90 | 80 | 85 | 95 | 90 |

**Table 2**

| | | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|
| Cyanate ester compound(A1) | | 10 | 90 | 30 | 50 | 80 | 96.13 | 94.97 | 30 | 30 |
| Cyanate ester compound(A2) | | | | | | | | | | |
| Phenol curing agent(B1) | | 3.1 | 3.81 | | | | 3.66 | | 3.28 | |
| Phenol curing agent(B2) | | | | 4.51 | 4.84 | 5.03 | | 5.03 | | |
| Epoxy resin(C1) | | 86.9 | 6.19 | 65.54 | 45.49 | 14.97 | | | 66.72 | 70 |
| Epoxy resin(C2) | | | | | | | | | | |
| Epoxy resin(C3) | | | | | | | | | | |
| Epoxy resin(C4) | | | | | | | | | | |
| Epoxy resin(C5) | | | | | | | | | | |
| Epoxy resin(C6) | | | | | | | | | | |
| Curing accelerator(D1) | | 0.5 | 0.5 | 0.5 | 0.5 | 0.5 | 0.5 | 0.5 | | 0.5 |
| Curing accelerator(D2) | | | | | | | | | | |
| Tg | °C | 150 | 215 | 155 | 175 | 180 | 225 | 190 | Uncured | Uncured |
| Viscosity | mPa·s | 3500 | 200 | 700 | 400 | 150 | 80 | 70 | | |
| Curability(150°C/1h) | | × | ○ | × | ○ | ○ | ○ | ○ | | |
| Adhesion | MPa | 13 | 38 | 27 | 26 | 27 | 36 | 32 | | |
| Adhesion force retention rate after storage under high temperature | % | 34 | 61 | 58 | 65 | 69 | 41 | 33 | | |
| Adhesion force retention rate after storage under high temperature and high humidity | % | 91 | 41 | 79 | 81 | 78 | 35 | 31 | | |
| 5% weight reduction temperature | °C | 340 | 420 | 350 | 370 | 390 | 440 | 390 | | |
| Rate of change in bending strength | % | 40 | 40 | 65 | 70 | 50 | 40 | 30 | | |

### Evaluation

All the working examples 1 to 19 exhibited a glass-transition temperature(s) not lower 170°C i.e. a high glass-transition temperature(s). Further, as for the working examples 1 to 19, it was confirmed that all the 5% weight reduction temperatures were not lower than 360°c, and that all the adhesion force retention rates after storage under high temperature and high humidity were high such that the degree of deterioration under a high-temperature and high-humidity atmosphere was small. Furthermore, since none of the working examples 1 to 19 employed a metal-containing material such as an organometallic catalyst, it is obvious that each of the working examples 1 to 19 had a high insulation property. In addition, it was also confirmed that each of the working examples 1 to 19 had a high heat resistance due to the fact that all the rates of change in bending strength had been maintained not lower than 70% in these working examples after storage under a high temperature.

### Industrial applicability

The heat-resistant liquid resin composition of the present invention is suitable for use in a power semiconductor mounted on a vehicle. This is because the composition of the present invention has a high glass-transition temperature and a high insulation property, and exhibits a small degree of deterioration under a high-temperature and high-humidity atmosphere.

## Claims

1. A liquid resin composition **characterized in** consisting of:
(A) a cyanate ester compound having not less than two cyanato groups in one molecule;
(B) a phenol curing agent containing 50 to 100 % by mass of a resorcinol-type phenolic resin represented by the following formula (1) 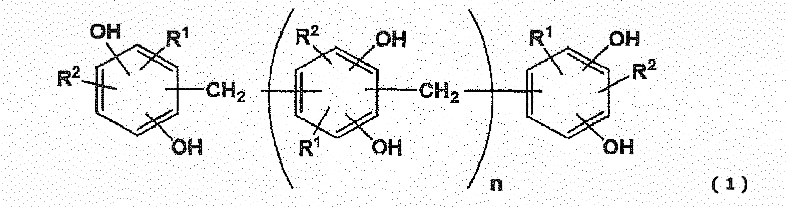 wherein n represents an integer of o to 10; each of R¹ and R² independently represents a hydrogen atom or a monovalent group selected from an alkyl group having 1 to 10 carbon atoms, an allyl group and a vinyl group;
(C) an Epoxy resin; and
(D) a curing accelerator, wherein
said cyanate ester compound (A) is in an amount of 30 to 80 parts by mass with respect to 100 parts by mass of a sum total of said cyanate ester compound (A), said phenol curing agent (B) and said Epoxy resin (C).

2. The liquid resin composition according to claim 1, **characterized in that** said component (C) is at least one liquid Epoxy resin selected from the group consisting of a liquid bisphenol A-type epoxy resin, a liquid bisphenol F-type Epoxy resin, a liquid naphthalene-type epoxy resin, a liquid aminophenol-type Epoxy resin, a liquid hydrogenated bisphenol-type Epoxy resin, a liquid alicyclic Epoxy resin, a liquid alcohol ether-type epoxy resin, a liquid cycloaliphatic-type epoxy resin and a liquid fluorene-type Epoxy resin.

3. The liquid resin composition according to claim 1 or claim 2, **characterized in that** cyanato groups in said cyanate ester compound (A) are in an amount of 1 to 50 equivalents with respect to 1 equivalent of hydroxyl groups in said resorcinol-type phenolic resin contained in said component (B).

4. The liquid resin composition according to any one of claims 1 to 3, **characterized in that** said component (D) is added in an amount of not larger than 5 parts by mass with respect to 100 parts by mass of said component (A).

## Patentansprüche

1. Flüssigharz-Gemisch, **dadurch gekennzeichnet, dass** es besteht aus:
(A) einer Cyanatester-Verbindung mit nicht weniger als zwei Cyanato-Gruppen in einem Molekül;
(B) einen Phenolhärter beinhaltend 50 bis 100 Gewichtsprozent eines Phenolharzes vom Resorcin-Typ, dargestellt durch die folgende Formel (1) 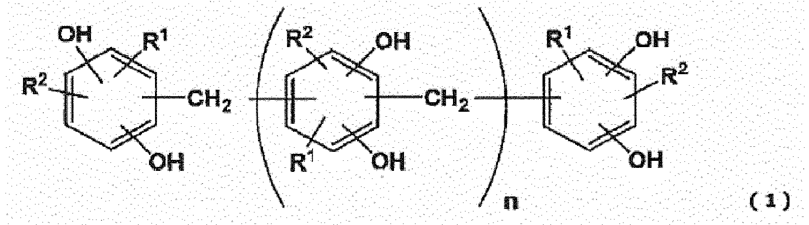 wobei n eine ganze Zahl zwischen 0 bis 10 repräsentiert; jedes von R¹ und R² repräsentiert unabhängig voneinander ein Wasserstoffatom oder eine einwertige Gruppe, ausgewählt aus einer Alkyl-Gruppe mit 1 bis 10 Kohlenstoffatomen, einer Allyl-Gruppe und einer Vinyl-Gruppe;
(C) einem Epoxidharz; und
(D) einem Aushärtebeschleuniger; wobei
die Cyanatester-Verbindung (A) in einer Menge von 30 bis 80 Massenteilen bezogen auf 100 Massenteile einer Gesamtsumme der Cyanatester-Verbindung (A), des Phenolhärters (B) und des Epoxidharzes (C) vorliegt.

2. Das Flüssigharz-Gemisch gemäß Anspruch 1, **dadurch gekennzeichnet, dass** die Komponente (C) zumindest ein flüssiges Epoxidharz ausgewählt aus der Gruppe bestehend aus einem flüssigen Epoxidharz vom Typ Bisphenol A, einem flüssigen Epoxidharz vom Typ Bisphenol F, einem flüssigen Epoxidharz vom Typ Naphtalin, einem flüssigen Epoxidharz vom Typ Aminophenol, einem flüssigen Epoxidharz vom Typ hydriertes Bisphenol, einem flüssigen alicyclischen Epoxidharz, einem flüssigen Epoxidharz vom Typ Alkoholether, einem flüssigen Epoxidharz vom cycloaliphatischen Typ und einem flüssigen Epoxidharz vom Typ Fluoren ist.

3. Das Flüssigharz-Gemisch gemäß Anspruch 1 oder 2, **dadurch gekennzeichnet, dass** die Cyanato-Gruppen in der Cyanatester-Verbindung (A) in einer Menge von 1 bis 50 Äquivalenten bezogen auf 1 Äquivalent Hydroxyl-Gruppen in dem in der Komponente (B) enthaltenen Phenolharz vom Resorcin-Typ vorliegen.

4. Das Flüssigharz-Gemisch gemäß einem der Ansprüche 1 bis 3, **dadurch gekennzeichnet, dass** die Komponente (D) in einer Menge von nicht mehr als 5 Massenteilen, bezogen auf 100 Massenteile der Komponente (A), zugegeben wird.

## Revendications

1. Composition de résine liquide **caractérisée en ce que** se compose de :
(A) un composé ester de cyanate n'ayant pas moins de deux groupes cyanato dans une molécule ;
(B) un agent de durcissement phénolique contenant de 50 à 100 % en masse d'une résine phénolique de type résorcinol représentée par la formule (1) suivante 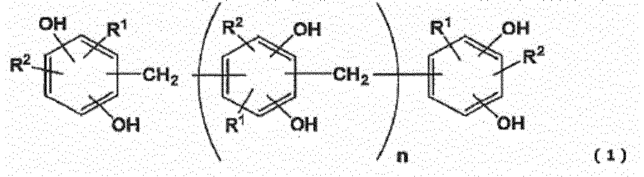 dans laquelle n représente un nombre entier de 0 à 10 ; chacun de R¹ et R² représente indépendamment un atome d'hydrogène ou un groupe monovalent choisi parmi un groupe alkyle ayant de 1 à 10 atomes de carbone, un groupe allyle et un groupe vinyle ;
(C) une résine époxy ; et
(D) un accélérateur de durcissement, dans laquelle
ledit composé ester de cyanate (A) est en une quantité de 30 à 80 parties en masse par rapport à 100 parties en masse d'une somme totale dudit composé ester de cyanate (A), dudit agent de durcissement phénolique (B) et de ladite résine époxy (C).

2. Composition de résine liquide selon la revendication 1, **caractérisée en ce que** ledit composant (C) est au moins une résine époxy liquide choisie dans le groupe constitué par une résine époxy de type bisphénol A liquide, une résine époxy de type bisphénol F liquide, une résine époxy de type naphtalène liquide, une résine époxy de type aminophénol liquide, une résine époxy de type bisphénol hydrogéné liquide, une résine époxy alicyclique liquide, une résine époxy de type éther alcoolique liquide, une résine époxy de type cycloaliphatique liquide et une résine époxy de type fluorène liquide.

3. Composition de résine liquide selon la revendication 1 ou la revendication 2, **caractérisée en ce que** les groupes cyanato dans ledit composé ester de cyanate (A) sont en une quantité de 1 à 50 équivalents par rapport à 1 équivalent des groupes hydroxyle dans ladite résine phénolique de type résorcinol contenue dans ledit composant (B).

4. Composition de résine liquide selon l'une quelconque des revendications 1 à 3, **caractérisée en ce que** ledit composant (D) est ajouté en une quantité non supérieure à 5 parties en masse par rapport à 100 parties en masse dudit composant (A).
